# EUROPEAN PATENT SPECIFICATION

(11) **EP 4 601 072 B1**
(45) Date of publication and mention of the grant of the patent: **02.12.2026**
(21) Application number: 25150226.6
(22) Date of filing: 03.01.2025
(51) Int. Cl.: H01M 10/42, H01M 50/207, H01M 50/503, H01M 50/249, H01M 50/507, H01M 50/519, H01M 50/233, H01M 50/213, H01M 50/284

(54) **RECHARGEABLE BATTERY PACK**
WIEDERAUFLADBARES BATTERIEPACK
BLOC-BATTERIE RECHARGEABLE

(30) Priority: 07.02.2024 KR 20240019056
(43) Date of publication of application: 13.08.2025
(73) Proprietor: SAMSUNG SDI CO., LTD., Yongin-si, Gyeonggi-do 17084 (KR)
(72) Inventor: Park, Sanghun, 17084 Yongin-si, Gyeonggi-do (KR)
(74) Representative: Gulde & Partner

(56) References cited:
- US-A1- 2016 172 653
- US-A1- 2017 256 826
- US-A1- 2022 416 370
- US-A1- 2023 411 705

## Description

### BACKGROUND

### 1. Field

Embodiments relate to a rechargeable battery pack.

### 2. Description of the Related Art

A rechargeable battery that can be repeatedly charged and discharged may be used as a battery that power a wireless mobile device. Such a battery is also attracting attention as a power source for an electric vehicle (EV) and a hybrid electric vehicle (HEV), which may be a solution to air pollution from gasoline or diesel vehicles that use fossil fuel.

Document US 2016/172653 A1 discloses the preamble of claim 1.

### SUMMARY

The embodiments may be realized by providing a rechargeable battery pack including a holder including a plurality of accommodation spaces therein; a plurality of unit battery cells in the plurality of accommodation spaces; at least one connection tab that electrically connects the plurality of unit battery cells on an upper portion of the holder; a busbar that includes a busbar plate electrically connected to the at least one connection tab and extending in a first direction along a side surface of the holder, and a bending connection portion on the upper portion of the holder, the bending connection portion being connected to the busbar plate and bent in a second direction that is perpendicular to the first direction; and a battery management system (BMS) circuit on the upper portion of the holder and electrically connected to the bending connection portion.

The holder may include a first holder including a plurality of first accommodation spaces therein, a part of the plurality of unit battery cells being accommodated therein, and the at least one connection tab being on a lower portion of the first holder; and a second holder on an upper portion of the first holder, the second holder including a plurality of second accommodation spaces therein, another part of the plurality of unit battery cells being accommodated in the plurality of second accommodation spaces, and the at least one connection tab being on an upper portion of the second holder.

The at least one connection tab may include a plurality of first connection tabs on the lower portion of the first holder and electrically connecting the plurality of unit battery cells; and a plurality of second connection tabs on the upper portion of the second holder and electrically connecting the plurality of unit battery cells.

The busbar may include a first busbar that electrically connects the plurality of first connection tabs and the BMS circuit; and a second busbar that electrically connects the plurality of second connection tabs and the BMS circuit.

The first busbar may include a first busbar plate including a first connection protrusion protruding from one edge thereof, the first connection protrusion being electrically connected to the plurality of first connection tabs on the lower portion of the first holder; an extension plate protruding from another edge of the first busbar plate and extending along the holder in the second direction; and a first bending connection portion that is bent in the second direction at an end of the extension plate.

The extension plate may connect between the first busbar plate and the first bending connection portion and has a bent shape.

The first bending connection portion may be folded multiple times to form a stack of layers in the second direction on the upper portion of the second holder.

The first bending connection portion may include a first fastening hole configured to be connected with the BMS circuit with a fastener.

The second busbar may include a second busbar plate including a second connection protrusion protruding from one edge thereof, the second connection protrusion being electrically connected to the plurality of second connection tabs on the upper portion of the second holder; and a second bending connection portion that protrudes from an edge of the second busbar plate and is bent in the second direction on the upper portion of the second holder.

The second bending connection portion may be folded multiple times to form a stack of layers in the second direction on the upper portion of the second holder.

The second bending connection portion may include a second fastening hole configured to be connected with the BMS circuit with a fastener.

The holder may include a first guide protrusion protruding from one side surface of the holder, the first guide protrusion being configured to guide an installation position of the first busbar.

The first guide protrusion may have a bent shape extending along an edge of the extension plate on the one side surface of the holder and guides the installation position of the first busbar.

The holder may include a second guide protrusion protruding from another side surface of the holder, the second guide protrusion being configured to guide an installation position of the second busbar.

The second guide protrusion may have a shape extending along an edge of the second busbar plate on the other side surface of the holder and guides the installation position of the second busbar.

### BRIEF DESCRIPTION OF THE DRAWINGS

Features will be apparent to those of skill in the art by describing in detail exemplary embodiments with reference to the attached drawings in which:
FIG. 1 is a schematic perspective view of a rechargeable battery pack according to an embodiment.
FIG. 2 is a schematic exploded perspective view of the rechargeable battery of FIG. 1.
FIG. 3 is a schematic side view of a side surface of a holder from which a second guide protrusion is protruded.
FIG. 4 is a schematic perspective view of the first busbar according to an embodiment.
FIG. 5 is a schematic side view of the first busbar of FIG. 4.
FIG. 6 is a schematic top plan view of the first busbar of FIG. 4.
FIG. 7 is a schematic side view of the first bending connection portion of the first busbar of FIG. 4 in a state of being bent.
FIG. 8 is an enlarged perspective view that schematically shows a state in which a first fastening hole is formed in the first bending connection portion of the first busbar of FIG. 4.
FIG. 9 is an enlarged perspective view that schematically shows a state in which a part of the first bending connection portion of FIG. 8, in which the first fastening hole is formed, is cut.
FIG. 10 is a schematic perspective view of a second busbar according to an embodiment.
FIG. 11 is a schematic side view of the second busbar of FIG. 10.
FIG. 12 is a schematic top plan view of the second busbar of FIG. 10.
FIG. 13 is an enlarged perspective view that schematically shows a state that the second bending connection portion of the second busbar of FIG. 10 is formed.
FIG. 14 is an enlarged perspective view of a main part that schematically shows a state of a portion of the second bending connection portion of FIG. 12, in which the second fastening hole is formed, is cut.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout. As used herein, the term "or" is not necessarily an exclusive term, e.g., "A or B" would include A, B, or A and B.

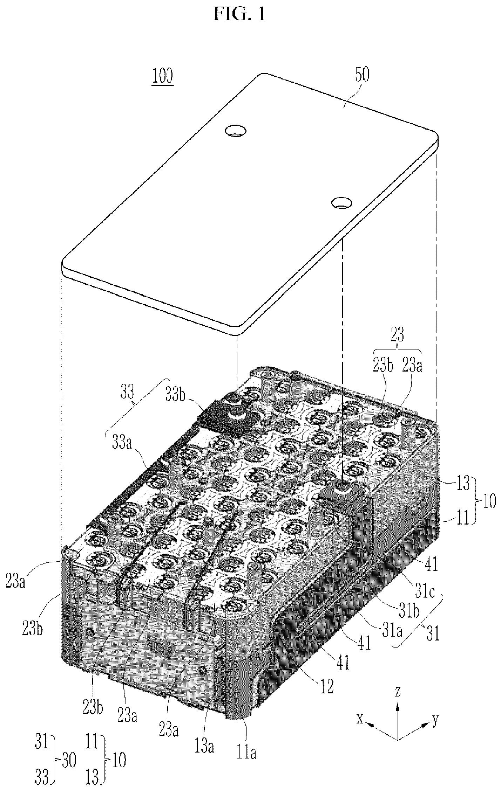

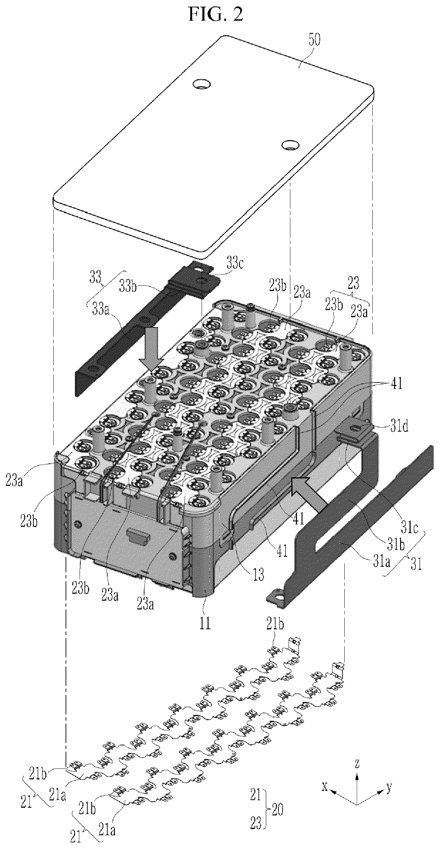

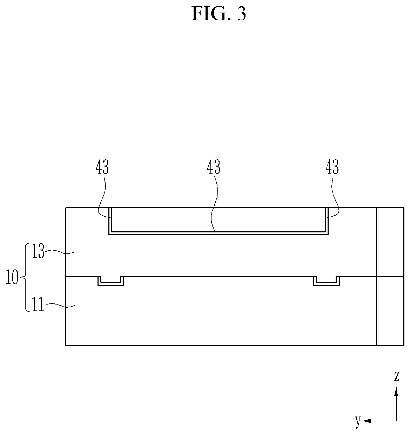

FIG. 1 is a schematic perspective view of a rechargeable battery pack according to an embodiment, FIG. 2 is a schematic exploded perspective view of the rechargeable battery of FIG. 1, and FIG. 3 is a schematic side view of a side surface of a holder from which a second guide protrusion is protruded.

As shown in FIG. 1 to FIG. 3, a rechargeable battery pack 100 according to an embodiment may include a holder 10 with a plurality of accommodation spaces therein, a plurality of unit battery cells 12 in the plurality of accommodation spaces, a connection tab 20 that electrically connects the plurality of unit battery cells 12 (e.g., at an upper portion of the holder 10), a busbar 30 (including busbar plates 31a and 33a that are electrically connected to the connection tab 20 and extend (e.g., lengthwise) in a first direction (y-axis direction) along a side surface of the holder 10 and bending connection portions 31c and 33b that are bent in a second direction (z-axis direction) perpendicular to the first direction and at the upper portion of the holder 10), and a BMS circuit 50 on the upper portion of the holder 10 and electrically connected to the bending connection portions 31c and 33b.

The plurality of accommodation spaces may be inside the holder 10 such that the plurality of unit battery cells 12 may be accommodated therein.

The plurality of accommodation spaces in the holder 10 may be arranged in a plurality of columns and rows across and entire area of the holder 10, and thus the plurality of unit battery cells 12 may be inserted into the plurality of columns and rows in the holder 10.

The holder 10 may include a first holder 11 and a second holder 13 that accommodate the plurality of unit battery cells 12.

The first holder 11 may include a plurality of first accommodation spaces 11a in which a part of each unit battery cell 12 is accommodated. The connection tab 20 may include at least one first connection tab 21 on a lower portion of the first holder 11.

In the first holder 11, the first accommodation space 11a may be arranged in a plurality of columns and rows such that the plurality of unit battery cells 12 may be partially accommodated inside.

The second holder 13 may be above or on the first holder 11, and a plurality of second accommodation spaces 13a accommodating the unit battery cells 12 together with the first holder 11 may be included therein.

In the second holder 13, a second accommodation space 13a may be arranged in a plurality of columns and rows such that the plurality of unit battery cells 12 may be partially accommodated inside.

The connection tab 20 may be in or on the first holder 11 and the second holder 13.

The connection tab 20 may include a plurality of the first connection tabs 21 electrically connecting lower portions of the plurality of unit battery cells 12 on the lower portion of the holder 10 (e.g., on the first holder 11), and a plurality of second connection tabs 23 electrically connecting upper portions of the plurality of unit battery cells 12 and on or in the upper portion of the holder 10 (e.g., on the second holder 13).

The first connection tabs 21 may each include a first tab plate 21a below the first holder 11, and a plurality of first tab protrusion portions 21b may protrude from an edge of each first tab plate 21a and may be electrically connected to the unit battery cells 12.

The first tab plates 21a may be fixed to the lower portion of the first holder 11, may be spaced apart from each other, and may be electrically connected to a portion of the plurality of unit battery cells 12 at the lower portion of the first holder 11. The plurality of first tab protrusion portions 21b may protrude from the edge of each first tab plate 21a.

The first tab protrusion portions 21b may be provided in plurality, may protrude along the edges of the first tab plates 21a, and may be electrically connected to the unit battery cells 12.

The first tab protrusion portions 21b may protrude in plurality from each of opposing sides of each first tab plate 21a according to a position of the first tab plate 21a, or may protrude in plurality from an edge of any side of each first tap plate 21a.

The second connection tabs 23 may be in or on an upper portion of the second holder 13 and may electrically connect the plurality of unit battery cells 12.

The second connection tabs 23 may each include a second tab plate 23a on an upper portion of the second holder 13, and a plurality of second tab protrusion portion 23b may protrude from edges of each second tab plate 23a and may be electrically connected to the unit battery cells 12.

The second tab plates 23a may be fixed while being separated from each other on the upper portion of the second holder 13, and they may be electrically connected to a part of the plurality of unit battery cells 12 on the second holder 13. The plurality of second tab protrusion portions 23b may protrude on the edges of each of the second tab plates 23a.

The second tab protrusion portions 23b may protrude in plurality along the edge of the second tab plate 23a and may be electrically connected to the unit battery cell 12.

The second tab protrusion portions 23b may protrude in plurality on each of both opposing sides of each second tab plate 23a, depending on the arranged position of the second tab plate 23a, or may also protrude in plurality in or on one edge position.

The above-described first and second connection tabs 21 and 23 may be installed in or the first holder 11 and the second holder 13, respectively, and thus the plurality of unit battery cells 12 may be electrically connected to each other.

In an implementation, the busbar 30 may be electrically connected to the connection tab 20 and may include the bending connection portions 31c and 33b extending to or on the upper portion of the holder 10.

The busbar 30 may be installed in or on each of the first holder 11 and the second holder 13, and thus the BMS circuit 50 and the unit battery cells 12 may be electrically connected.

The busbar 30 may include the busbar plates 31a and 33a (electrically connected to the connection tab 20 and extending (e.g., lengthwise) in the first direction (y-axis direction) along the side surface of the holder 10), and the bending connection portions 31c and 33b (connected to the busbar plates 31a and 33a and bent in a second direction (z-axis direction) that is perpendicular to the first direction and on the upper portion of the holder 10).

In an implementation, the busbar 30 may include a first busbar 31 (that electrically connects the first connection tab 21 and the BMS circuit 50), and a second busbar 33 (that electrically connects the second connection tab 23 and the BMS circuit 50).

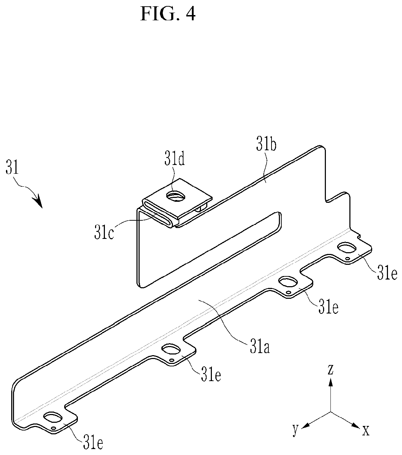

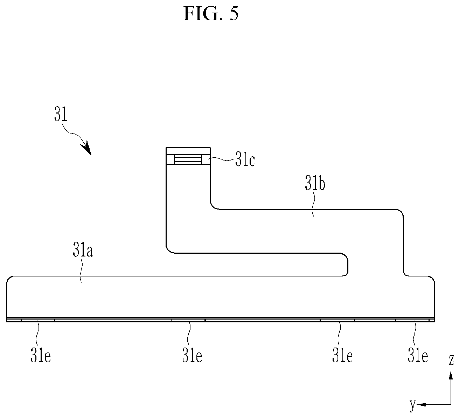

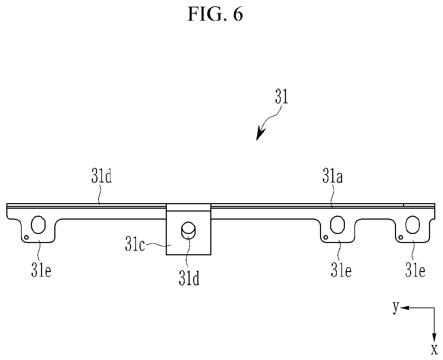

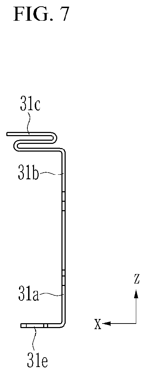

FIG. 4 is a schematic perspective view of the first busbar according to an embodiment, FIG. 5 is a schematic side view of the first busbar of FIG. 4, FIG. 6 is a schematic top plan view of the first busbar of FIG. 4, and FIG. 7 is a schematic side view of the first bending connection portion of the first busbar of FIG. 4 in a state of being bent.

As shown in FIG. 4 to FIG. 7, the first busbar 31 may include a first busbar plate 31a (including first connection protrusions 31e protruding on or toward a lower portion of the first holder 11 at one edge of the first busbar plate 31a and electrically connected to the first connection tab 21), an extension plate 31b (one side of which extends from another edge of the first busbar plate 31a and along an upward direction of the holder 10 (e.g., z-axis direction)), and a first bending connection portion 31c bent at an end of the extension plate 31b and bent in a second direction (z-axis direction). In an implementation, the first bending connection portion 31c being bent in the second direction may mean that the first bending connection portion 31c is bent to be folded over onto itself such that layers of the first bending connection portion 31c are stacked in the second direction.

One first connection protrusion 31e that is electrically connected to the first connection tab 21 may protrude from an edge of the first busbar plate 31a, which may extend in the first direction (y-axis direction) along the side surface of the holder 10.

The first connection protrusion 31e may extend while being bent to a position such that the first connection tab 21 is at the edge of the first busbar plate 31a, and may be electrically connected to the first connection tab 21 by a fastener, e.g., a bolt or the like.

A plurality of the first connection protrusions 31e may protrude to help provide stable fixation of the first busbar plate 31a to a side surface of the holder 10 and stable electrical connection to the first connection tab 21.

In an implementation, the extension plate 31b extending in the upper direction of the holder 10 may be connected to (e.g., continuously extend from) the edge of the first busbar plate 31a.

One side of the extension plate 31b may be connected to the edge of the first busbar plate 31a, and a side surface of the extension plate 31b may extend upwardly along the holder 10 and in surface-contact with the side surface of the holder 10.

The extension plate 31b may extend in a bent state (e.g., may have a bent, indirect, or non-linear shape) from the edge of the first busbar plate 31a in the upper direction of the holder 10 (e.g., the z-axis direction). In an implementation, a portion of the extension plate 31b (e.g., in the length direction) may be bent to facilitate a more stable electrical connection to the BMS circuit 50 in response to the installation position of the first busbar 31.

The extension plate 31b may be on the side surface of the holder 10 due to a guiding action of a first guide protrusion 41 protruding on or from the side surface of the holder 10.

The first guide protrusion 41 may protrude on the side surfaces of first holder 11 and the second holder 13.

In an implementation, that is characterized in a high amount of mechanical stability, the extension plate 31b may be on a portion of a side surface of each of the first holder 11 and the second holder 13, and the first guide protrusion 41 may stably support the extension plate 31b on the side surfaces of the first holder 11 and the second holder 13 (e.g., may provide a space for accommodating the extension plate 31b).

The first guide protrusion 41 may protrude on a portion of each of the first holder 11 and the second holder 13 in response or corresponding to a curved or bent shape of the edge of the extension plate 31b to stably support the extension plate 31b installed on the holder 10.

In an implementation, that is also characterized in a high amount of mechanical stability, the first guide protrusion 41 may protrude in correspondence to (e.g., surrounding or along edges of) the curved shape of the extension plate 31b on the portion of each of the first holder 11 and the second holder 13, thereby stably supporting the installed extension plate 31b.

The first bending connection portion 31c may be at an end of the extension plate 31b.

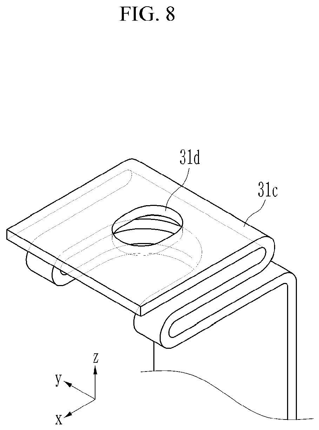

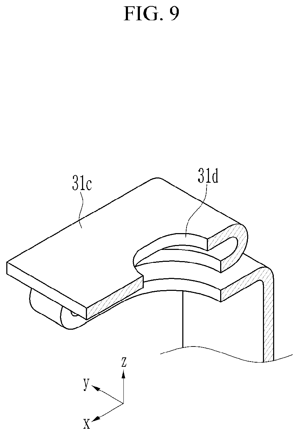

FIG. 8 is an enlarged perspective view that schematically shows a state in which a first fastening hole is formed in the first bending connection portion of the first busbar of FIG. 4, and FIG. 9 is an enlarged perspective view that schematically shows a state in which a part of the first bending connection portion of FIG. 8, in which the first fastening hole is formed, is cut in order to visualize a cross section.

As shown in FIG. 8 and FIG. 9, the first bending connection portion 31c may be connected to an end of the extension plate 31b and then bent, and may be bent in a protruded state in a second direction (z-direction) on the upper side of the holder 10.

The first bending connection portion 31c may be bent or folded in multiple stages in the second direction (z-axis direction), on the upper portion of the second holder 13 while being connected to the extension plate 31b.

The first bending connection portion 31c may be bent multiple times on or from the extension plate 31b to help compensate for a variable distance between the BMS circuit 50 and the first busbar 31 in the process of establishing an electrical connection at the upper portion of the holder 10 to thereby facilitate a stable electrical connection between the BMS circuit 50 and the first busbar 31. In an implementation, the first bending connection portion 31c may provide flexibility to the first busbar 31 to facilitate and stabilize the connection between the BMS circuit 50 and the first busbar 31 (e.g., by allowing the first bending connection portion 31c to move slightly in response to the variable distance between the BMS circuit 50 and the first busbar 31).

In an implementation, the first bending connection portion 31c may be bent multiple times, e.g., approximately in an S shape, at an end of the extension plate 31b. In an implementation, the first bending connection portion 31c may have a different bending shape in response to the separation distance between the second holder 13 and the BMS circuit 50.

In an implementation, a first fastening hole 31d may be included in this first bending connection portion 31c for establishing the connection to the BMS circuit 50.

The first fastening hole 31d may be formed through or extend in a width or thickness direction (z-axis direction) of the multi-bent first bending connection portion 31c (e.g., through the stack of layers forming the first bending connection portion 31c) to facilitate establishing the electrical connection between the BMS circuit 50 and the first bending connection portion 31c by the fastener.

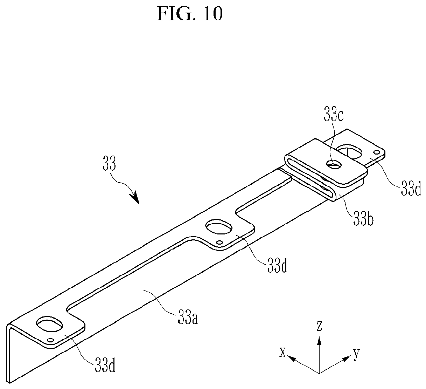

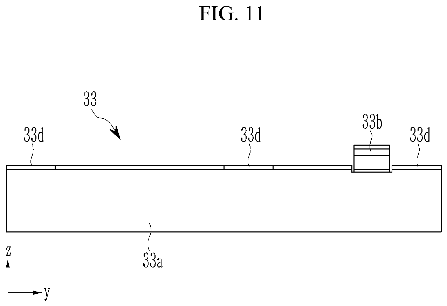

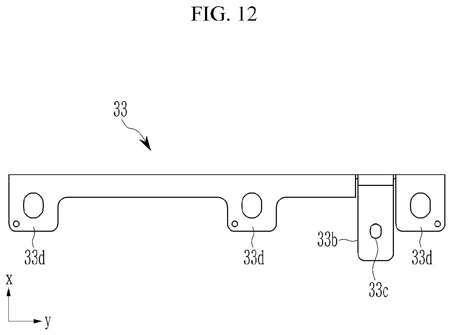

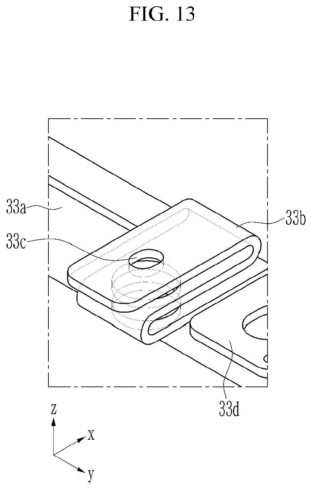

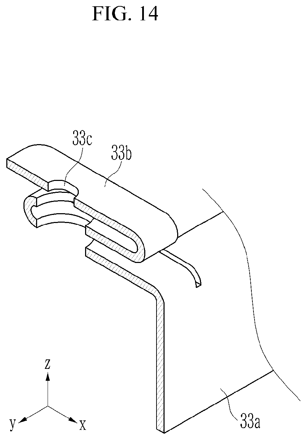

FIG. 10 is a schematic perspective view of a second busbar according to an embodiment, FIG. 11 is a schematic side view of the second busbar of FIG. 10, FIG. 12 is a schematic top plan view of the second busbar of FIG. 10, FIG. 13 is an enlarged perspective view that schematically shows a state that the second bending connection portion of the second busbar of FIG. 10 is formed, and FIG. 14 is an enlarged perspective view of a main part that schematically shows a state of a portion of the second bending connection portion of FIG. 12, in which the second fastening hole is formed, is cut.

As shown in FIG. 10 to FIG. 14, the second busbar 33 may include a second busbar plate 33a (on or from which a second connection protrusion 33d electrically connected to the second connection tab 23 in the upper portion of the second holder 13 may protrude from one edge), and a second bending connection portion 33b (protruding from an edge of the second busbar plate 33a and bent in the second direction (z-axis direction) on the upper portion of the second holder 13).

In the second busbar plate 33a, the second connection protrusion 33d may be electrically connected to the second connection tab 23 and may protrude (e.g., in an x-axis direction) from an edge extending (e.g., lengthwise) in the first direction (y-axis direction) at or on the side surface of the second holder 13.

The second connection protrusion 33d may extend in a bent state (e.g., may be bent) from or relative to the edge of the second busbar plate 33a onto the second connection tab 23, and may be electrically connected to the second connection tab 23 by a fastener, e.g., a bolt or the like.

In an implementation, a plurality of second connection protrusions 33d may protrude for stable fixation of the second busbar plate 33a to the side surface of the holder 10 and a stable electrical connection to the second connection tab 23.

The second bending connection portion 33b may extend onto an upper side of the holder 10 and may protrude at or from the edge of the second busbar plate 33a.

The second bending connection portion 33b may be connected to an end of the second busbar plate 33a and may be bent, e.g., may be bent in a protruded state in the second direction (z direction) from the upper side of the holder 10.

The second bending connection portion 33b may be connected to (e.g., may continuously extend from) the second busbar plate 33a and may be bent multiple times in the second direction, on the upper portion of the second holder 13.

The second bending connection portion 33b may extend from the edge of the second busbar plate 33a and may be bent multiple times on the upper portion of the second holder 13 to help compensate for a variable distance between the BMS circuit 50 and the second busbar 33 on the upper portion of the second holder 13 in the process of establishing an electrical connection to thereby facilitate a stable electrical connection between the BMS circuit 50 and the second busbar 33. In an implementation, the second bending connection portion 33b may provide flexibility to the second busbar 33 to facilitate and stabilize the connection between the BMS circuit 50 and the second busbar 33 (e.g., by allowing the second bending connection portion 33b to move slightly in response to the variable distance between the BMS circuit 50 and the second busbar 33).

A second fastening hole 33c may be in the second bending connection portion 33b for connection with the BMS circuit 50.

The second fastening hole 33c may be formed or extend through a width or thickness direction (z-axis direction) of the multi-bent second bending connection portion 33b to facilitate establishing the electrical connection between the BMS circuit 50 and the second bending connection portion 33b by the fastener.

In an implementation, a second guide protrusion 43, which may help guide the installation position of the second busbar 33, may protrude on the other side of holder 10 (e.g., relative to the side that include the first guide protrusion 41 thereon).

In an implementation, the second guide protrusion 43 may protrude on a side opposite to a side where the first guide protrusion 41 is formed on the second holder 13, the installation state of the second busbar 33 can be guided.

In an implementation, the second guide protrusion 43 may protrude in response or corresponding to the (e.g., curved or bent) shape of edges the second busbar plate 33a on the side of the first holder 11 (e.g., may extend along or surround edges of second busbar plate 33a), and thus the installation state of the second busbar plate 33a may be stably supported.

As described above, in the rechargeable battery pack 100 of the present embodiment, the first and second bending connection portions 31c and 33b that are bent multiple times may be a part of the busbar 30. Accordingly, the first and second bending connection portions 31c and 33b may be electrically connected to the BMS circuit 50 while compensating for variable distanced or spaced positions of the holder 10 and the BMS circuit 50 such that a more stable electrical connection between the busbar 30 and the BMS circuit 50 may be established.

In addition, the first and second guide protrusions 41 and 43, which help support the first and second busbars 31 and 33, may protrude on or from the side of the holder 10, and thus it is possible to stably support the installation state of the busbar 30 and improve durability.

By way of summation and review, a battery may alternately perform charge and discharge, and it may be necessary to efficiently control the charge and discharge of the battery to maintain the appropriate operating state and performance.

For this purpose, a battery management system (BMS) that manages the status and performance of the battery may be provided in a battery pack. The BMS may manage the battery by measuring a current, a voltage, a temperature, or the like of the battery and recording them in a memory.

The BMS may be electrically connected to the battery in a rechargeable battery pack by a busbar, and may manage the battery's status and performance.

If a connection part of the busbar and BMS were to not remain horizontal, stable electrical connection could be difficult, and durability could be deteriorated.

One or more embodiments may provide a rechargeable battery pack that facilitates a stable electrical connection between a busbar and a battery management system (BMS) and that has improved durability.

One or more embodiments may provide a rechargeable battery pack that stably supports a BMS circuit in a horizontal state by bending an end of a busbar that is electrically connected to the BMS circuit.

According to the embodiment, the multi-bent bending connection portion may be formed in the busbar such that the BMS circuit is electrically connected to the busbar while compensating for distanced positions of the holder and the BMS circuit, thereby enabling stable electrical connection between the busbar and the BMS circuit.

According to the embodiment, the guide protrusion supporting the busbar may protrude from the side surface of the holder, thereby stably supporting the installation state of the busbar and improving durability.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A rechargeable battery pack (100), comprising:
a holder (10) comprising a plurality of accommodation spaces therein;
a plurality of unit battery cells (12) in the plurality of accommodation spaces;
at least one connection tab (20) that electrically connects the plurality of unit battery cells (12) on an upper portion of the holder (10);
a busbar (30) that comprises:
a busbar plate (31a, 33a) electrically connected to the at least one connection tab (20);
**characterized in that** the busbar plate further extends in a first direction along a side surface of the holder (10),
and
a bending connection portion on the upper portion of the holder (10), the bending connection portion being connected to the busbar plate (31a, 33a) and bent in a second direction that is perpendicular to the first direction; and
a battery management system, BMS, circuit on the upper portion of the holder (10) and electrically connected to the bending connection portion.

2. The rechargeable battery pack (100) of claim 1, wherein the holder (10) comprises:
a first holder (11) comprising a plurality of first accommodation spaces (11a) therein, a part of the plurality of unit battery cells (12) being accommodated therein, and the at least one connection tab (20) being on a lower portion of the first holder (11); and
a second holder (13) on an upper portion of the first holder (11), the second holder (13) comprising a plurality of second accommodation spaces (13a) therein, another part of the plurality of unit battery cells (12) being accommodated in the plurality of second accommodation spaces (13a), and the at least one connection tab (20) being on an upper portion of the second holder (13).

3. The rechargeable battery pack (100) of claim 2, wherein the at least one connection tab (20) comprises:
a plurality of first connection tabs (21) on the lower portion of the first holder (11) and electrically connecting the plurality of unit battery cells (12); and
a plurality of second connection tabs (23) on the upper portion of the second holder (13) and electrically connecting the plurality of unit battery cells (12).

4. The rechargeable battery pack (100) of claim 3, wherein the busbar (30) comprises:
a first busbar (31) that electrically connects the plurality of first connection tabs (21) and the BMS circuit (50); and
a second busbar (33) that electrically connects the plurality of second connection tabs (23) and the BMS circuit (50).

5. The rechargeable battery pack (100) of claim 4, wherein the first busbar (31) comprises:
a first busbar plate (31a) comprising a first connection protrusion (31e) protruding from one edge thereof, the first connection protrusion (31e) being electrically connected to the plurality of first connection tabs (21) on the lower portion of the first holder (11);
an extension plate (31b) protruding from another edge of the first busbar plate (31a) and extending along the holder (10) in the second direction; and
a first bending connection portion (31c) that is bent in the second direction at an end of the extension plate (31b).

6. The rechargeable battery pack (100) of claim 5, wherein the extension plate (31b) connects between the first busbar plate (31a) and the first bending connection portion (31c) and has a bent shape.

7. The rechargeable battery pack (100) of claim 6, wherein the first bending connection portion (31c) is folded multiple times to form a stack of layers in the second direction on the upper portion of the second holder (13).

8. The rechargeable battery pack (100) of claim 6 or 7, wherein the first bending connection portion (31c) comprises a first fastening hole (31d) configured to be connected with the BMS circuit (50) with a fastener.

9. The rechargeable battery pack (100) of claims 4 to 8, wherein the second busbar (33) comprises:
a second busbar plate (33a) comprising a second connection protrusion (33d) protruding from one edge thereof, the second connection protrusion (33d) being electrically connected to the plurality of second connection tabs (23) on the upper portion of the second holder (13); and
a second bending connection portion (31c, 33b) that protrudes from an edge of the second busbar plate (33a) and is bent in the second direction on the upper portion of the second holder (13).

10. The rechargeable battery pack (100) of claim 9, wherein the second bending connection portion (31c, 33b) is folded multiple times to form a stack of layers in the second direction on the upper portion of the second holder (13).

11. The rechargeable battery pack (100) of claim 9 or 10, wherein the second bending connection portion (31c, 33b) comprises a second fastening hole (33c) configured to be connected with the BMS circuit (50) with a fastener.

12. The rechargeable battery pack (100) of claim 11, wherein the holder (10) comprises a first guide protrusion (41) protruding from one side surface of the holder (10), the first guide protrusion (41) being configured to guide an installation position of the first busbar (31).

13. The rechargeable battery pack (100) of claim 12, wherein the first guide protrusion (41) has a bent shape extending along an edge of the extension plate (31b) on the one side surface of the holder (10) and guides the installation position of the first busbar (31).

14. The rechargeable battery pack (100) of claim 13, wherein the holder (10) comprises a second guide protrusion (43) protruding from another side surface of the holder (10), the second guide protrusion (43) being configured to guide an installation position of the second busbar (33).

15. The rechargeable battery pack (100) of claim 14, wherein the second guide protrusion (43) has a shape extending along an edge of the second busbar plate (33a) on the other side surface of the holder (10) and guides the installation position of the second busbar (33).

## Patentansprüche

1. Wiederaufladbarer Batteriepack (100), umfassend:
einen Halter (10), der eine Vielzahl von Unterbringungsräumen darin umfasst;
eine Vielzahl von Einheitsbatteriezellen (12) in der Vielzahl von Unterbringungsräumen;
mindestens eine Verbindungsfahne (20), die die Vielzahl von Einheitsbatteriezellen (12) an einem oberen Abschnitt des Halters (10) elektrisch verbindet;
eine Sammelschiene (30), die Folgendes umfasst:
eine Sammelschienenplatte (31a, 33a), die elektrisch mit der mindestens einen Verbindungsfahne (20) verbunden ist;
**dadurch gekennzeichnet, dass** sich die Sammelschienenplatte ferner in einer ersten Richtung entlang einer Seitenfläche des Halters (10) erstreckt, und
einen Biegeverbindungsabschnitt an dem oberen Abschnitt des Halters (10), wobei der Biegeverbindungsabschnitt mit der Sammelschienenplatte (31a, 33a) verbunden und in eine zweite Richtung gebogen ist, die senkrecht zu der ersten Richtung ist; und
eine Batterieverwaltungssystemschaltung, BMS-Schaltung, die an dem oberen Abschnitt des Halters (10) liegt und elektrisch mit dem Biegeverbindungsabschnitt verbunden ist.

2. Wiederaufladbarer Batteriepack (100) nach Anspruch 1, wobei der Halter (10) Folgendes umfasst:
einen ersten Halter (11), der eine Vielzahl von ersten Unterbringungsräumen (11a) darin umfasst, wobei ein Teil der Vielzahl von Einheitsbatteriezellen (12) darin untergebracht ist und wobei sich die mindestens eine Verbindungsfahne (20) an einem unteren Abschnitt des ersten Halters (11) befindet; und
einen zweiten Halter (13) an einem oberen Abschnitt des ersten Halters (11), wobei der zweite Halter (13) eine Vielzahl von zweiten Unterbringungsräumen (13a) darin umfasst, wobei ein anderer Teil der Vielzahl von Einheitsbatteriezellen (12) in der Vielzahl von zweiten Unterbringungsräumen (13a) untergebracht ist und wobei sich die mindestens eine Verbindungsfahne (20) an einem oberen Abschnitt des zweiten Halters (13) befindet.

3. Wiederaufladbarer Batteriepack (100) nach Anspruch 2, wobei die mindestens eine Verbindungsfahne (20) Folgendes umfasst:
eine Vielzahl von ersten Verbindungsfahnen (21), die an dem unteren Abschnitt des ersten Halters (11) liegt und die Vielzahl von Einheitsbatteriezellen (12) elektrisch verbindet; und
eine Vielzahl von zweiten Verbindungsfahnen (23), die an dem oberen Abschnitt des zweiten Halters (13) liegt und die Vielzahl von Einheitsbatteriezellen (12) elektrisch verbindet.

4. Wiederaufladbarer Batteriepack (100) nach Anspruch 3, wobei die Sammelschiene (30) Folgendes umfasst:
eine erste Sammelschiene (31), die die Vielzahl von ersten Verbindungsfahnen (21) und die BMS-Schaltung (50) elektrisch verbindet; und
eine zweite Sammelschiene (33), die die Vielzahl von zweiten Verbindungsfahnen (23) und die BMS-Schaltung (50) elektrisch verbindet.

5. Wiederaufladbarer Batteriepack (100) nach Anspruch 4, wobei die erste Sammelschiene (31) Folgendes umfasst:
eine erste Sammelschienenplatte (31a), die einen ersten Verbindungsvorsprung (31e) umfasst, der von einer Kante davon vorspringt, wobei der erste Verbindungsvorsprung (31e) elektrisch mit der Vielzahl von ersten Verbindungsfahnen (21) an dem unteren Abschnitt des ersten Halters (11) verbunden ist;
eine Verlängerungsplatte (31b), die von einer anderen Kante der ersten Sammelschienenplatte (31a) vorspringt und sich entlang des Halters (10) in der zweiten Richtung erstreckt; und
einen ersten Biegeverbindungsabschnitt (31c), der an einem Ende der Verlängerungsplatte (31b) in die zweite Richtung gebogen ist.

6. Wiederaufladbarer Batteriepack (100) nach Anspruch 5, wobei die Verlängerungsplatte (31b) zwischen der ersten Sammelschienenplatte (31a) und dem ersten Biegeverbindungsabschnitt (31c) verbindet und eine gebogene Form aufweist.

7. Wiederaufladbarer Batteriepack (100) nach Anspruch 6, wobei der erste Biegeverbindungsabschnitt (31c) mehrmals gefaltet ist, um einen Stapel von Schichten in der zweiten Richtung an dem oberen Abschnitt des zweiten Halters (13) zu bilden.

8. Wiederaufladbarer Batteriepack (100) nach Anspruch 6 oder 7, wobei der erste Biegeverbindungsabschnitt (31c) ein erstes Befestigungsloch (31d) umfasst, das dazu konfiguriert ist, mit einem Befestigungselement mit der BMS-Schaltung (50) verbunden zu werden.

9. Wiederaufladbarer Batteriepack (100) nach Anspruch 4 bis 8, wobei die zweite Sammelschiene (33) Folgendes umfasst:
eine zweite Sammelschienenplatte (33a), die einen zweiten Verbindungsvorsprung (33d) umfasst, der von einer Kante davon vorspringt, wobei der zweite Verbindungsvorsprung (33d) elektrisch mit der Vielzahl von zweiten Verbindungsfahnen (23) an dem oberen Abschnitt des zweiten Halters (13) verbunden ist; und
einen zweiten Biegeverbindungsabschnitt (31c, 33b), der von einer Kante der zweiten Sammelschienenplatte (33a) vorspringt und an dem oberen Abschnitt des zweiten Halters (13) in die zweite Richtung gebogen ist.

10. Wiederaufladbarer Batteriepack (100) nach Anspruch 9, wobei der zweite Biegeverbindungsabschnitt (31c, 33b) mehrmals gefaltet ist, um einen Stapel von Schichten in der zweiten Richtung an dem oberen Abschnitt des zweiten Halters (13) zu bilden.

11. Wiederaufladbarer Batteriepack (100) nach Anspruch 9 oder 10, wobei der zweite Biegeverbindungsabschnitt (31c, 33b) ein zweites Befestigungsloch (33c) umfasst, das dazu konfiguriert ist, mit einem Befestigungselement mit der BMS-Schaltung (50) verbunden zu werden.

12. Wiederaufladbarer Batteriepack (100) nach Anspruch 11, wobei der Halter (10) einen ersten Führungsvorsprung (41) umfasst, der von einer Seitenfläche des Halters (10) vorspringt, wobei der erste Führungsvorsprung (41) dazu konfiguriert ist, eine Einbaulage der ersten Sammelschiene (31) zu führen.

13. Wiederaufladbarer Batteriepack (100) nach Anspruch 12, wobei der erste Führungsvorsprung (41) eine gebogene Form aufweist, die sich entlang einer Kante der Verlängerungsplatte (31b) an der einen Seitenfläche des Halters (10) erstreckt und die Einbaulage der ersten Sammelschiene (31) führt.

14. Wiederaufladbarer Batteriepack (100) nach Anspruch 13, wobei der Halter (10) einen zweiten Führungsvorsprung (43) umfasst, der von einer anderen Seitenfläche des Halters (10) vorspringt, wobei der zweite Führungsvorsprung (43) dazu konfiguriert ist, eine Einbaulage der zweiten Sammelschiene (33) zu führen.

15. Wiederaufladbarer Batteriepack (100) nach Anspruch 14, wobei der zweite Führungsvorsprung (43) eine Form aufweist, die sich entlang einer Kante der zweiten Sammelschienenplatte (33a) an der anderen Seitenfläche des Halters (10) erstreckt und die Einbaulage der zweiten Sammelschiene (33) führt.

## Revendications

1. Bloc-batterie rechargeable (100), comportant :
un support (10) comportant une pluralité d'espaces de réception en son sein ;
une pluralité d'éléments de batterie unitaires (12) dans la pluralité d'espaces de réception ;
au moins une patte de connexion (20) qui connecte électriquement la pluralité d'éléments de batterie unitaires (12) sur une partie supérieure du support (10) ;
une barre de connexion (30) qui comporte :
une plaque de jeu de barres (31a, 33a) connectée électriquement à l'au moins une patte de connexion (20) ;
**caractérisé en ce que** la plaque de jeu de barres s'étend davantage dans une première direction le long d'une surface latérale du support (10), et
une partie de connexion par pliage sur la partie supérieure du support (10), la partie de connexion par pliage étant connectée à la plaque de jeu de barres (31a, 33a) et pliée dans une deuxième direction qui est perpendiculaire à la première direction ; et
un circuit de système de gestion de batterie, BMS, sur la partie supérieure du support (10) et connecté électriquement à la partie de connexion par pliage.

2. Bloc-batterie rechargeable (100) selon la revendication 1, dans lequel le support (10) comporte :
un premier support (11) comportant une pluralité de premiers espaces de réception (11a) en son sein, une partie de la pluralité d'éléments de batterie unitaires (12) étant reçue en son sein, et l'au moins une patte de connexion (20) étant sur une partie inférieure du premier support (11) ; et
un deuxième support (13) sur une partie supérieure du premier support (11), le deuxième support (13) comportant une pluralité de deuxièmes espaces de réception (13a) en son sein, une autre partie de la pluralité d'éléments de batterie unitaires (12) étant reçue dans la pluralité de deuxièmes espaces de réception (13a), et l'au moins une patte de connexion (20) étant sur une partie supérieure du deuxième support (13).

3. Bloc-batterie rechargeable (100) selon la revendication 2, dans lequel l'au moins une patte de connexion (20) comporte :
une pluralité de premières pattes de connexion (21) sur la partie inférieure du premier support (11) et connectant électriquement la pluralité d'éléments de batterie unitaires (12) ; et
une pluralité de deuxièmes pattes de connexion (23) sur la partie supérieure du deuxième support (13) et connectant électriquement la pluralité d'éléments de batterie unitaires (12).

4. Bloc-batterie rechargeable (100) selon la revendication 3, dans lequel la barre de connexion (30) comporte :
une première barre de connexion (31) qui connecte électriquement la pluralité de premières pattes de connexion (21) et le circuit BMS (50) ; et
une deuxième barre de connexion (33) qui connecte électriquement la pluralité de deuxièmes pattes de connexion (23) et le circuit BMS (50).

5. Bloc-batterie rechargeable (100) selon la revendication 4, dans lequel la première barre de connexion (31) comporte :
une première plaque de jeu de barres (31a) comportant une première saillie de connexion (31e) faisant saillie à partir d'un bord de celle-ci, la première saillie de connexion (31e) étant connectée électriquement à la pluralité de premières pattes de connexion (21) sur la partie inférieure du premier support (11) ;
une plaque d'extension (31b) faisant saillie à partir d'un autre bord de la première plaque de jeu de barres (31a) et s'étendant le long du support (10) dans la deuxième direction ; et
une première partie de connexion par pliage (31c) qui est pliée dans la deuxième direction au niveau d'une extrémité de la plaque d'extension (31b).

6. Bloc-batterie rechargeable (100) selon la revendication 5, dans lequel la plaque d'extension (31b) se connecte entre la première plaque de jeu de barres (31a) et la première partie de connexion par pliage (31c) et présente une forme pliée.

7. Bloc-batterie rechargeable (100) selon la revendication 6, dans lequel la première partie de connexion par pliage (31c) est repliée plusieurs fois pour former un empilement de couches dans la deuxième direction sur la partie supérieure du deuxième support (13).

8. Bloc-batterie rechargeable (100) selon la revendication 6 ou 7, dans lequel la première partie de connexion par pliage (31c) comporte un premier trou de fixation (31d) configuré pour être connecté au circuit BMS (50) avec un élément de fixation.

9. Bloc-batterie rechargeable (100) selon les revendications 4 à 8, dans lequel la deuxième barre de connexion (33) comporte :
une deuxième plaque de jeu de barres (33a) comportant une deuxième saillie de connexion (33d) faisant saillie à partir d'un bord de celle-ci, la deuxième saillie de connexion (33d) étant connectée électriquement à la pluralité de deuxièmes pattes de connexion (23) sur la partie supérieure du deuxième support (13) ; et
une deuxième partie de connexion par pliage (31c, 33b) qui fait saillie à partir d'un bord de la deuxième plaque de jeu de barres (33a) et est pliée dans la deuxième direction sur la partie supérieure du deuxième support (13).

10. Bloc-batterie rechargeable (100) selon la revendication 9, dans lequel la deuxième partie de connexion par pliage (31c, 33b) est repliée plusieurs fois pour former un empilement de couches dans la deuxième direction sur la partie supérieure du deuxième support (13).

11. Bloc-batterie rechargeable (100) selon la revendication 9 ou 10, dans lequel la deuxième partie de connexion par pliage (31c, 33b) comporte un deuxième trou de fixation (33c) configuré pour être connecté au circuit BMS (50) avec un élément de fixation.

12. Bloc-batterie rechargeable (100) selon la revendication 11, dans lequel le support (10) comporte une première saillie de guidage (41) faisant saillie à partir d'une surface latérale du support (10), la première saillie de guidage (41) étant configurée pour guider une position d'installation de la première barre de connexion (31).

13. Bloc-batterie rechargeable (100) selon la revendication 12, dans lequel la première saillie de guidage (41) présente une forme pliée s'étendant le long d'un bord de la plaque d'extension (31b) sur ladite surface latérale du support (10) et guide la position d'installation de la première barre de connexion (31).

14. Bloc-batterie rechargeable (100) selon la revendication 13, dans lequel le support (10) comporte une deuxième saillie de guidage (43) faisant saillie à partir d'une autre surface latérale du support (10), la deuxième saillie de guidage (43) étant configurée pour guider une position d'installation de la deuxième barre de connexion (33).

15. Bloc-batterie rechargeable (100) selon la revendication 14, dans lequel la deuxième saillie de guidage (43) présente une forme s'étendant le long d'un bord de la deuxième plaque de jeu de barres (33a) sur l'autre surface latérale du support (10) et guide la position d'installation de la deuxième barre de connexion (33).
